# EUROPÄISCHE PATENTSCHRIFT

(11) **EP 1 022 546 B1**
(45) Veröffentlichungstag und Bekanntmachung des Hinweises auf die Patenterteilung: **07.08.2002**
(21) Anmeldenummer: 00101402.6
(22) Anmeldetag: 25.01.2000
(51) Int. Cl.: G01D 11/30, G01B 9/02, G01B 21/04

(54) **Messkopfhalterung**
Support for a measuring head
Support pour une tête de mesure

(30) Priorität: 25.01.1999 DE 19902781
(43) Veröffentlichungstag der Anmeldung: 26.07.2000
(73) Patentinhaber: Ettemeyer AG, 89231 Neu-Ulm (DE)
(72) Erfinder: Ettemeyer, Andreas, Dr., 89231 Neu-Ulm (DE)
(74) Vertreter: Alber, Norbert, Dipl.-Ing.

(56) Entgegenhaltungen:
- EP-A- 0 379 919
- DE-C- 702 856
- R.B. BAARKER: "PROBE MOUNTING FOR NEAR-SURFACE MEASUREMENTS" IBM TECHNICAL DISCLOSURE BULLETIN, Bd. 22, Nr. 2, Juli 1979 (1979-07), Seite 481 XP002136032

## Beschreibung

Die Erfindung betrifft eine Meßkopfhalterung für einen Meßkopf, insbesondere einen optischen Meßkopf.

Derartige optische Meßköpfe sind beispielsweise 3-D-Speckle-Interferometrie-Meßköpfe, mit deren Hilfe die Verformung und/oder die Kontur der Oberfläche eines Objektes zerstörungsfrei gemessen werden kann. Zu diesem Zweck muß der Meßkopf in eine definierte Lage zur Oberfläche des zu vermessenden Objektes gebracht und dort während der Messung auch in dieser definierten Lage gehalten werden.

Dabei stellt sich häufig das Problem, daß ein Meßkopf ein einige Quadratzentimeter großes Meßfeld am Objekt vermessen kann, das Meßobjekt jedoch wesentlich größer ist. In diesen Fällen ist es häufig erwünscht, an mehreren Meßstellen die Oberfläche des Objektes zu vermessen, und insbesondere in unterschiedlichen Zuständen des Objektes. Dann ist es notwendig, zunächst in einem Ausgangszustand, und anschließend, beispielsweise in einem belasteten Zustand, die verschiedenen Meßstellen des Objektes zu vermessen.

In diesem Zusammenhang ist es aus "IBM - Technical Disclosure Bulletin", Vol. 22, Nr. 2, Juli 1979, S. 481 bekannt, einen Meßkopf mittels einer Meßkopfhalterung am Objekt aufzusetzen, wobei die Meßkopfhalterung ein Aufnahmeteil zum definierten Befestigen des Meßkopfes aufweist. Die Meßkopfhalterung wird dabei mit Hilfe von Standbeinen einfach auf die Oberfläche des Objektes aufgesetzt, und darüber hinaus nicht fixiert. Über die Art der Lagedefinition des Meßkopfes an dem Aufnahmeteil der Meßkopfhalterung ist darüber hinaus ebenfalls nur zu entnehmen, daß hiermit der Abstand des Meßkopfes über dem Objekt eingestellt werden kann. Ob auch die Drehlage des Meßkopfes bezüglich der Meßkopfhalterung bestimmbar ist, ist nicht zu entnehmen.

Darüber hinaus zeigt DE-C-70 28 56 eine Meßkopfhalterung für ein Aufsetzthermometer, wobei die Halterung ebenfalls auf der Oberfläche des Objektes lediglich aufgelegt und sonst nicht fixiert wird. Auch hier ist nur die Höhenlage des Meßkopfes, hier des Thermometers, gegenüber dem Objekt definiert.

Da der Meßkopf in der Regel sehr teuer ist, werden an den einzelnen Meßstellen nicht unterschiedliche, sondern nacheinander ein und derselbe Meßkopf eingesetzt. Um dabei reproduzierbare Ergebnisse in beiden Zuständen des Meßobjektes zu erreichen, besteht die Aufgabe der vorliegenden Erfindung darin, eine Meßkopfhalterung zu schaffen, mit deren Hilfe man einfach und kostengünstig in der Lage ist, den Meßkopf während der Messungen in gleichbleibender Lage gegenüber dem Meßobjekt zu halten. Zur Vorbereitung des Objektes soll es insbesondere möglich sein, die Meßkopfhalterung in definierter Lage am Objekt vorher zu befestigen, und den Meßkopf dann an der montierten Meßkopfhalterung in definierter Lage zu befestigen und wieder zu lösen.

Diese Aufgabe wird durch die Merkmale des Anspruches 1 gelöst. Vorteilhafte Ausführungsformen ergeben sich aus den abhängigen Ansprüchen.

Dadurch, daß die Meßkopfhalterung ein Aufnahmeteil für den Meßkopf umfaßt, kann der Meßkopf jederzeit von der Meßkopfhalterung gelöst werden, ohne diese vom Objekt zu entfernen.

Dadurch, daß das Aufnahmeteil wenigstens ein Befestigungselement umfaßt, ist eine Fixierung des Aufnahmeteiles am Objekt unabhängig von der Fixierung des Meßkopfes möglich.

Durch Ausbilden des Aufnahmeteiles als Aufsatzring mit einer mittigen Durchgangsöffnung, deren Längsrichtung mit der Beobachtungsrichtung des Meßkopfes übereinstimmt, wird eine sehr stabile Befestigung des Meßkopfes am Objekt erreicht, da die Ringform des Aufnahmeteiles eine hohe Stabilität gewährt, ohne die Beobachtung des Objektes durch den Meßkopf zu beeinträchtigen.

Durch Benutzung von Füßen als Befestigungselementen, welche einerseits am Aufnahmeteil, also insbesondere dem Aufsatzring, befestigt sind und andererseits mit ihrem freien vorderen Ende am Objekt aufsetzen, kann einerseits die Anzahl der Aufsatzpunkte, in der Regel drei für eine definierte aber nicht überbestimmte Lagerung, gewählt werden, und andererseits die Position dieser Füße entsprechend der Form des Objektes, in dem am Aufsatzring mehrere mögliche Aufnahmepositionen für die Füße vorhanden sind.

Im Sinne einer möglichst guten Stabilität der Positionierung des Meßkopfhalters gegenüber dem Objekt wäre es naheliegend, die Aussatzpunkte der Füße möglichst weit voneinander zu entfernen, also beispielsweise auch die Füße vom Aufsatzring aus schräg nach außen laufen zu lassen. Dies bringt jedoch das Problem mit sich, daß einerseits eine Zuordnung des Meßfeldes hinsichtlich der Position auf der Oberfläche des Objektes nur schwer möglich ist, und andererseits das Problem, daß bei Verformung der Oberfläche im Meßfeld unklar ist, wie sich die Oberfläche des Objektes bezüglich des Meßfeldes verlagert. Zu diesem Zweck sind die Aufsatzpunkte der Meßkopfhalterung, insbesondere die Aufsatzpunkte der Füße auf dem Objekt, so gewählt, daß wenigstens einer der Aufsatzpunkte, insbesondere alle Aufsatzpunkte, nahe an oder gerade noch im Meßfeld liegen.

Ferner sind die Kontaktpunkte der Meßkopfhalterung, insbesondere die Kontaktpunkte der Füße, so ausgebildet, daß entweder nur ein Aufsatzpunkt, also Fuß, immer fest auf seinem Objektpunkt verbleibt, die beiden anderen sich dagegen entlang der Oberfläche des Objektes bewegen können oder statt der anderen Füße eine bezüglich des Meßobjektes externe, unabhängige Halterung, z. B. ein Roboterarm, vorhanden ist.

Die Alternative besteht darin, daß alle Kontaktpunkte der Füße auf dem Objekt fest am Objekt angeordnet sind, und bei z. B. Dehnung der Objektoberfläche eine bei allen Füßen gleichmäßige elastische Verformung der Füße erfolgt.

Während im ersten Fall der feste Aufsatzpunkt als Fixpunkt zwischen Meßfeld und Objektoberfläche auch bei Verformung der Objektoberfläche dient, ist im zweiten Fall der Fixpunkt zwischen Objektoberfläche und Meßfeld die geometrische Mitte zwischen den fixen Aufsatzpunkten, also in der Regel die geometrische Mitte des Aufsatzringes.

Eine weitere Möglichkeit besteht darin, daß mindestens drei Füße des Aufsatzringes einen immer gleichbleibenden Abstand (Länge des Fußes) zwischen dem Aufsatzring und dem Objekt sicherstellen, ohne daß einer der Aufsatzpunkte als Fixpunkt dient. Auch dies reicht aus, um das in mathematischer Hinsicht bestehende Problem eines Gleichungssystems aus drei Gleichungen mit drei Unbekannten zu lösen. Allerdings darf zwischen Ausgangszustand und Meßzustand dabei die Verlagerung des Meßfeldes nicht so groß sein, daß keine Überschneidungen der Meßfelder in den beiden Zuständen mehr bestehen bleiben.

Die Befestigung des Aufsatzringes am Objekt erfolgt insbesondere unabhängig vom Meßkopf, und zwar z. B. mittels Federkraft, elastischer Vorspannung von Hebeln, Vakuumsaugern etc., insbesondere Über-Totpunkt-Hebeln, oder mittels Magnetkraft. Zu diesem Zweck sind insbesondere seitlich auskragend in den Aufsatzring Spannbolzen einschraubbar, an denen entweder Magnethalter, die auf der magnetischen Objektoberfläche aufsetzen, befestigbar sind, welche in ihrem Verlauf vorzugsweise elastisch, beispielsweise mittels beinhalteter Feder, ausgebildet sind, oder an den Spannbolzen werden Spanngurte oder ähnliche Elemente befestigt, die das Objekt umgreifen bzw. umschlingen.

Die definierte und jederzeit lösbare Befestigung des Meßkopfes an der Meßkopfhalterung, also insbesondere am Aufsatzring, erfolgt über Paßelemente einerseits und Fixierung, beispielsweise Verschraubung, andererseits. Die Paßelemente, insbesondere Paßbohrungen oder in die Paßbohrungen eingesetzte Paßstifte in Zentralbohrungen eingreifende z. B. Kugeln etc., sind insbesondere an der ringförmigen planen Rückseite des Aufnahmeringes angeordnet. In diese Paßbohrungen passen entweder solche Paßstifte, die an der entsprechenden Seite des Meßkopfes fix angeordnet sind, oder in die Paßbohrungen sind Paßstifte eingesetzt, die in entsprechende Gegenbohrungen des Meßkopfes passen.

Insbesondere sind die Paßelemente dabei so angeordnet, daß der Meßkopf auch nur in einer bestimmten Position am Aufnahmering aufgesetzt werden kann.

Die Fixierung erfolgt dann z. B. über Verschraubung zwischen Meßkopf und Aufnahmering, wozu am Aufnahmering in Längsrichtung verlaufende Durchgangsöffnungen, insbesondere an mehreren Stellen über den Umfang verteilt, angeordnet sind.

Bei Bestrahlung der Oberfläche eines Objektes mit Laserlicht, und insbesondere mit überlagertem Referenzstrahl ist die Kontur der Objektoberfläche schwerer erkennbar. Daher erleichtert die Weißlichtbeleuchtung bzw. Beleuchtung mit sichtbarem Licht die Zuordnung des Meßergebnisses zur Objektoberfläche.

Um Zugbelastungen, die am den Meßkopf versorgenden Kabel auftreten, nicht auf den Kontakt zwischen Meßkopfhalterung und Objekt wirken zu lassen, ist insbesondere eine Zugentlastung in Form eines elastischen, federnden Kabelschlaufe als Längenpuffer an dem Kabel vorzusehen. Dies kann in Form einer in Längsrichtung federnden Gummimanschette, in Form einer Schlinge im Kabel mittels elastischem Schlingenbildner oder durch einfache Spiralführung des Kabels geschehen.

Ausführungsformen gemäß der Erfindung sind im folgenden anhand der Figuren beispielhaft näher beschrieben.

Es zeigen
- Fig. 1:: eine Aufsicht auf den Aufsatzring von der vorderen Stirnfläche her,
- Fig. 2:: Schnittdarstellungen geschnitten in Längsrichtung des Aufsatzringes,
- Fig. 3:: Verbindungsmöglichkeiten des Meßkopfes 3 am Aufsatzring 2,
- Fig. 4:: die Ausbildung der Füße als Magnetfüße,
- Fig. 5:: eine Befestigung am Objekt mittels einzelner Magnethalter,
- Fig. 6:: eine Befestigung am Objekt mittels eines Magnetringes,
- Fig. 7:: eine Befestigung am Objekt mit umgreifendem Spanngurt, und
- Fig. 8:: eine weitere Befestigungslösung mittels Spanngurt.

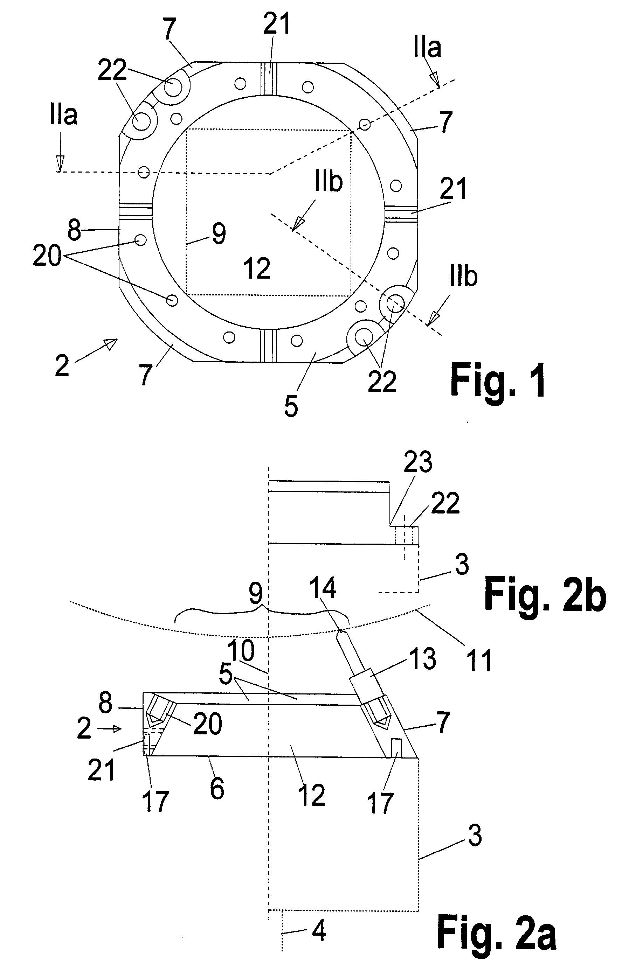

Fig. 2a zeigt in der rechten Bildhälfte den erwünschten Endzustand, nämlich einen Aufnsatzring 2, von dessen vorderer Stirnfläche 5 mehrere Füße 13 abstreben und an dem zu vermessenden Objekt 11 fest und in definierter Position anliegen, während auf der hinteren Stirnfläche 6 des Aufsatzringes 2 der angedeutete Meßkopf 3 aufgesetzt und in definierter Lage befestigt ist, wobei von dem Meßkopf 3 an der Hinterseite das ihn mit der Auswerteelektronik verbindende Kabel 4 abstrebt.

Die Figuren 1 und 2 zeigen den Aufsatzring 2 im Detail:

Die Schnittdarstellung der Fig. 2a in Längsrichtung 10, also der Durchgangsrichtung der mittigen Durchgangsöffnung 12 des Aufsatzringes 2, zeigt, daß die hintere Stirnfläche 6 des Aufsatzringes eine ebene Ringfläche ist, während die vordere Stirnfläche 5 eine kegelförmig nach innen geneigte Ringfläche ist. In dieser vorderen Stirnfläche 5 sind lotrecht zur Stirnfläche und gleichmäßig über den Umfang verteilt Gewindebohrungen 20 vorhanden, die dem wahlweisen Einschrauben von Füßen 13 dienen, deren vordere freien Enden auf dem Objekt 11 aufsitzen.

Auch eine ebene vordere Stirnfläche 5 und nach innen gekröpfte Füße sind denkbar.

Aufgrund der Schrägstellung der ringförmigen vorderen Stirnfläche 5 weisen auch die in die Gewindebohrungen 20 eingeschraubten Füße 13 leicht nach innen zur Mitte des Aufsatzringes 2 hin, so daß ihre Spitzen 14 noch innerhalb der Projektion auf den freien Durchgang 12 des Aufsatzringes 2 liegen. Wie in der rechten Bildhälfte der Fig. 2a dargestellt, weist mindestens einer der Füße 13 an seinem vorderen freien Ende eine Spitze, vorzugsweise eine gehärtete Spitze 14, auf, um fest auf der Oberfläche des Objektes 11 unverrutschbar aufsitzen zu können.

In der Regel werden drei Füße 13 in den Aufsatzring 2 eingeschraubt, entweder gleichmäßig über den Umfang verteilt oder je nach Form des Objektes angeordnet, um eine definierte Auflage auf dem Objekt 11 zu schaffen.

Entsprechend der Neigung der vorderen, kegeligen Stirnfläche 5, also lotrecht hierzu, ist sowohl die innere Umfangsfläche des Aufsatzringes 2 kegelstumpfförmig geneigt, als auch die äußere Umfangsfläche, zumindest über einen Teil des Umfanges. Diese kegelstumpfförmige Außenkontur ist an den vier einander um 90° getrennten Quadranten jeweils durch eine lotrecht zur hinteren Stirnfläche 6 stehende lotrechte Flanke 8 unterbrochen.

Diese lotrechte Flanke 8 dient dem hierzu lotrechten und damit parallel zur hinteren Stirnfläche 6 möglichen Einbringen von Quergewindebohrungen 21 in den vier Quadranten, die den Aufsatzring durchdringen und in die vorzugsweise von außen her Befestigungsmittel eingeschraubt werden können.

Im Bereich der schrägen Flanken 7, wenigstens auf zwei einander gegenüberliegenden solcher Flanken 7, vorzugsweise an allen vier schrägen Flanken 7, sind durch Ausbildung einer Schulter 23 am Außenumfang, deren Schenkel lotrecht bzw. parallel zur hinteren, ebenen Stirnfläche 6 verlaufen, Laschen geschaffen, durch die hindurch sich Befestigungsöffnungen 22 parallel zur Längsrichtung 10 des Aufsatzringes erstrecken.

Diese Befestigungsöffnungen 22 dienen als Befestigungslaschen zum Hindurchstecken einer Verschraubung und Verschrauben des Meßkopfes 3 am Aufsatzring 2.

In der hinteren, ebenen Stirnfläche 6 sind in Längsrichtung 10 über den Umfang verteilt mehrere Paßbohrungen 17 als Sackbohrungen eingebracht, die dem Einstecken von nicht dargestellten Paßstiften dienen, die wiederum in den Meßkopf hineinragen, zur definierten Positionierung des Meßkopfes 3 gegenüber dem Aufsatzring 2.

In Fig. 1 ist ferner in der Durchgangsöffnung 12 das rechteckige Meßfeld 9 angedeutet, welches von einem auf den Aufsatzring 2 aufgesetzten Meßkopf 3 vermessen werden kann.

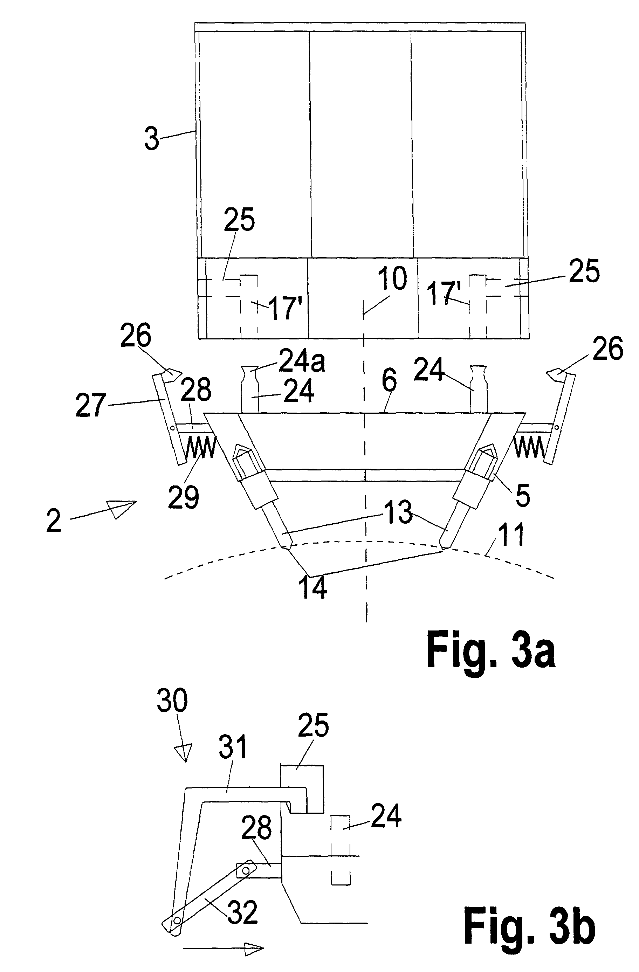

Fig. 3a zeigt eine Verbindung des Aufsatzringes 2, der über drei Füße 13, die jeweils über Spitzen 14 verfügen, auf dem Objekt 11 aufsitzt, mit dem Meßkopf 3 mittels einer Rastverbindung:

Dabei sind in die Paßbohrungen 17 des Aufsatzringes 2 Paßstifte 24 eingesteckt, die in entsprechende Paßbohrungen 17' des Meßkopfes 3 hineinragen, wenn der Meßkopf 3 auf der hinteren, ebenen Stirnfläche 6 des Aufsatzringes 2 aufgesetzt ist. Die Paßstifte 24 weisen dabei in ihrem hinteren, in den Meßkopf 3 hineinragenden Bereich eine ringförmige Einschnürung 24a auf, und in diesem Bereich trifft auf die Paßbohrungen 17' im Meßkopf 3 jeweils eine von außen radial eingebrachte Querbohrung.

Dies ermöglicht es, daß ein Fortsatz 26 radial von außen in die Querbohrung 25 eingebracht und möglichst paßgenau in die Einschnürung 24a greifend eine formschlüssige Verriegelung zwischen dem Meßkopf 3 und den Paßstiften 24 bewirkt. Sofern die Paßstifte 24 ihrerseits formschlüssig, beispielsweise über Verschraubung, im Aufsatzring 2 befestigt sind, ergibt dies eine formschlüssige und definierte Fixierung des Aufsatzringes 2 gegenüber dem Meßkopf 3.

Zu diesem Zweck sind die Fortsätze 26, die jedem der Paßstifte 24 zugeordnet sind, am vorderen Ende eines etwa parallel zur Längsrichtung 10 verlaufenden Schwenkhebels 27 angeordnet, und weisen radial nach innen, während der Schwenkhebel 27 seinerseits beabstandet vom Fortsatz 26 an einem Basishebel 28 schwenkbar befestigt ist, der an dem Aufsatzring 2 befestigt, radial nach außen ragt, beispielsweise durch Einschrauben in die Quergewindebohrungen 21.

Der Schwenkhebel 27 und damit dessen Fortsatz 26 sind über eine Feder 29 in die verriegelnde Lage vorgespannt.

Fig. 3b zeigt eine andere Lösung einer formschlüssigen Verbindung, indem die Positionierung zwischen Aufsatzring 2 und Meßkopf 3 ebenfalls wieder über Paßstifte 24 erfolgt, das Fixieren jedoch über einen über Totpunkthebel, einen sogenannten Schnapper 30.

Dieser besteht aus einem Haltehebel 31, der gekröpft ausgebildet ist und mit seinem freien vorderen Ende in eine Querbohrung 25 oder eine ähnliche radial eingebrachte Öffnung des Umfanges des Meßkopfes 3 eingreift, und davon beabstandet über einen Zwischenhebel 32 wiederum an einem Basishebel 28 verschwenkbar gelagert ist, der radial vom Aufsatzring 2 abstrebt.

Nach Einhängen des freien Endes des Haltehebels 31 in der Querbohrung 25, die vorzugsweise einen Hinterschnitt aufweist, wird aufgrund der Elastizität der Hebel und nach Überschreiten eines Totpunktes auf dem Bewegungsweg des Haltehebels 31 eine vorgespannte Fixierung des Meßkopfes 3 am Aufsatzring 2 erzielt.

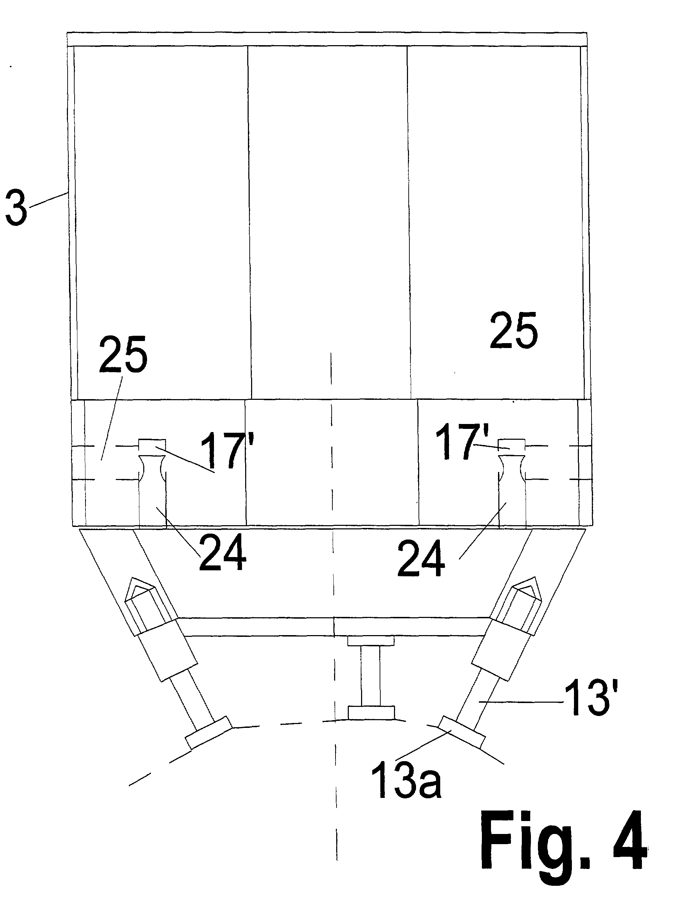

Fig. 4 zeigt eine Lösung, bei der die Füße als Magnetfüße 13' ausgebildet sind, also an ihrem freien Ende, mit welchem sie auf dem Objekt 11 aufsitzen, einen Magneten 13a aufweisen, insbesondere einen Permanentmagneten mit hoher Haltekraft.

Da bei dieser Lösung - ebenso wie bei der Lösung gemäß Fig. 3a, bei der alle Füße 13 mit Spitzen 14 ausgestattet sind - kann durch Belastung des Objektes 11 sich der Abstand der Aufsatzpunkte der Füße 13 auf dem Objekt ändern. Da die Verbindungen zwischen Fuß und Objekt jeweils fest sind, muß dies durch entsprechende Eigenelastizität der Füße 13 ausgeglichen werden, so daß es darauf ankommt, daß die verwendeten Füße 13 untereinander jeweils die gleiche Biegesteifigkeit aufweisen.

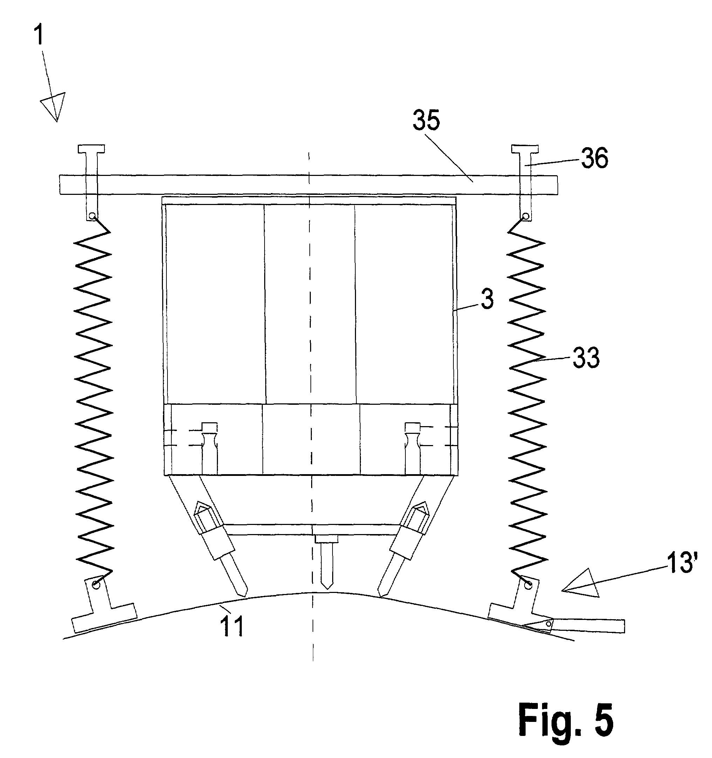

Die Figuren 5 bis 8 zeigen - unabhängig von der Art der verwendeten Füße - Befestigungsmöglichkeiten der Meßkopfhalterung 1 am Objekt 11.

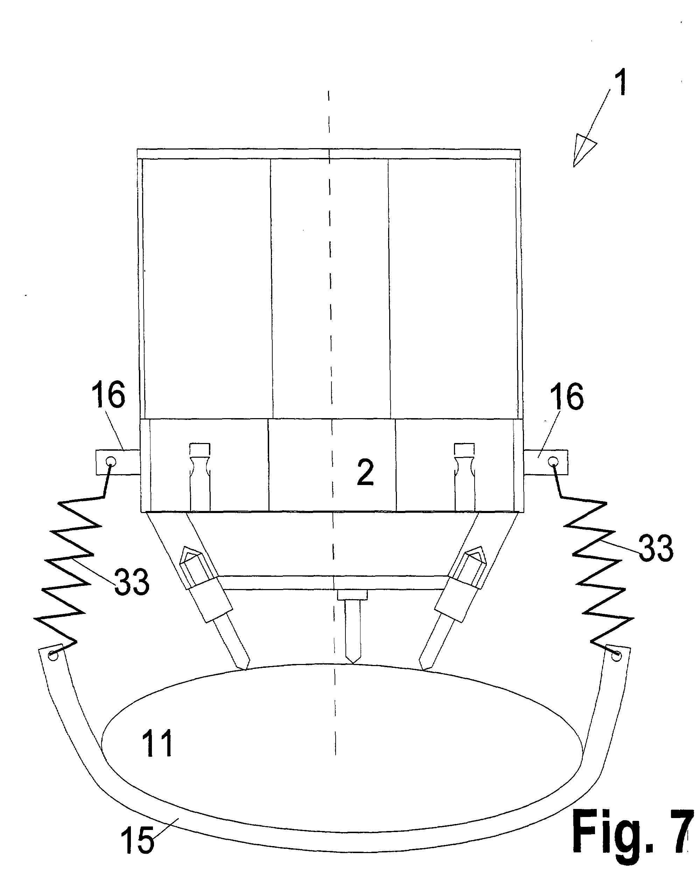

Fig. 7 zeigt eine Lösung, bei welcher in die Quergewindebohrungen 21 Spannbolzen 16 eingeschraubt sind, die seitlich aus dem Aufsatzring 2 an zwei gegenüberliegenden Seiten vorstehen. An diesen Spannbolzen 16 kann ein Spanngurt 15 mit seinen Enden eingehängt werden, der sich über die von der Meßkopfhalterung 1 abgewandte Rückseite des Objektes 11 hinweg erstreckt und entweder selbst längselastisch ist oder indem eine oder mehrere Zugfedern 33 zum Aufbringen einer Vorspannkraft angeordnet sind.

Eine analoge Vorrichtung kann zusätzlich um 90° gedreht ein zweites Mal vorhanden sein, so daß sich die Spanngurte 15 dabei kreuzen.

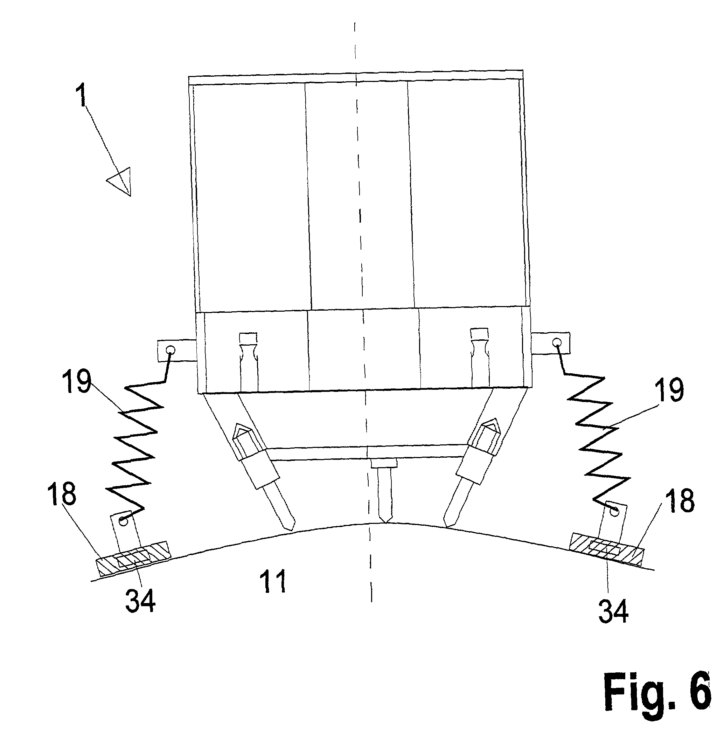

Fig. 6 zeigt eine Lösung, bei der an den Spannbolzen 16 der Fig. 7 Zugbänder 19 angeordnet sind, die radial nach außen und nach unten gegen das Objekt 11 gerichtet sind und mit einem Kontaktring an ihren freien Enden fest verbunden sind. Der Kontaktring 18 haftet entweder mit Hilfe von darin eingelassenen Magneten 34 am Objekt 11, oder mit Hilfe von Klebstoff.

Die Vorspannkraft, mit welcher die Füße 13 gegen das Objekt 11 gepreßt werden, wird durch die Eigenelastizität der gespannten Zugbänder 19 aufgebracht.

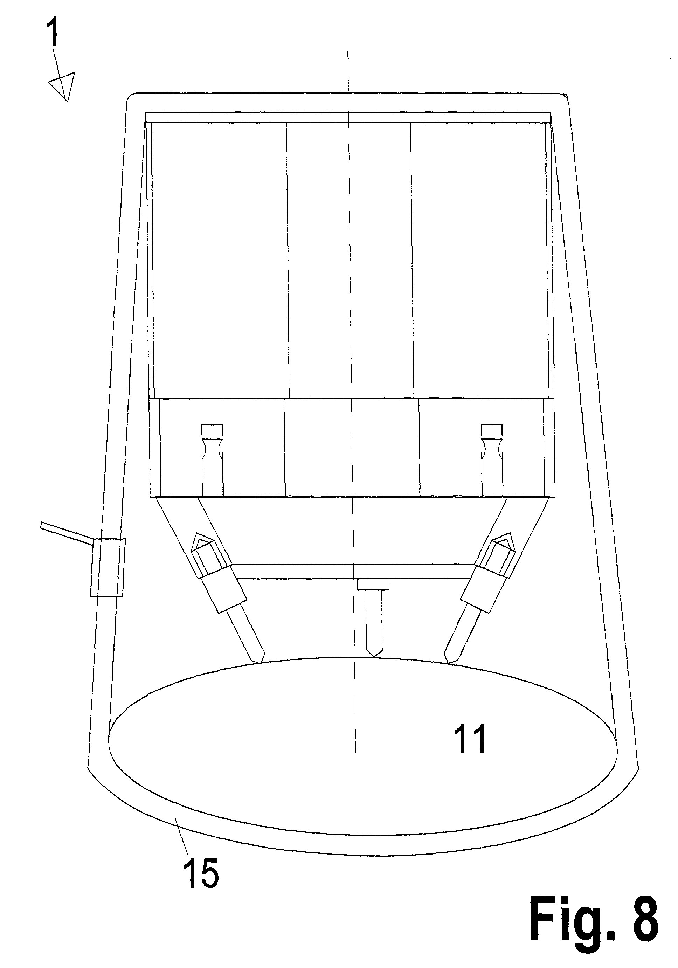

Die Figuren 5 und 8 zeigen Lösungen, bei welchen die Befestigung der Meßkopfhalterung 1 am Objekt 11 auch den Meßkopf 3 mitfixiert, was einerseits eine sehr sichere Befestigungsart darstellt, andererseits jedoch ein schnelles und unproblematisches Abnehmen des Meßkopfes 3 und Belassen der Meßkopfhalterung 1 am Objekt verhindert.

Gemäß Fig. 8 ist - ähnlich zur Lösung der Fig. 7 - ein Spanngurt 15 um die Rückseite des Objektes herumgeschlungen. Dieser endet jedoch nicht an dem Aufsatzring 2, sondern ist vorzugsweise in Form einer geschlossenen Schlaufe um die Rückseite des Meßkopfes 3 herumgelegt.

Fig. 5 zeigt eine Lösung, bei welcher von der Rückseite des Meßkopfes 3 Befestigungsstreben 35 radial nach außen abstreben, die am Meßkopf 3 befestigt sind. An den freien Enden der Befestigungsstreben 35 sind elastische Zugelemente, insbesondere Zugfeder 33, angeordnet, an deren anderen Ende ein Magnetfuß 13' befestigt ist, der auf der Oberfläche des Objektes magnetisch haftet.

In diesem Zustand steht die Zugfeder, die an jedem der Befestigungsstreben 35 vorhanden ist, bereits unter Zugspannung und preßt die Meßkopfhalterung 1 gegen das Objekt 1.

Zur Regulierung der Vorspannkraft kann die Feder 33 nicht direkt, sondern mit Hilfe eines in Federlängsrichtung verlaufenden Gewindebolzens 36 an der Befestigungsstrebe 35 angeordnet sein, so daß über ein Verschrauben des Gewindebolzens 36 die Vorspannkraft der Zugfeder 33 einstellbar ist.

Je nach Haltekraft der verwendeten Magnete (es werden insbesondere Selten-Erd-Magnete verwendet) müssen an den Magneten Abhebevorrichtungen, insbesondere Kipphebel, zum Entfernen der Magnete vom Objekt vorgesehen, insbesondere fest angeordnet, sein.

### BEZUGSZEICHENLISTE

- 1: Meßkopfhalterung
- 2: Aufsatzring
- 3: Meßkopf
- 4: Meßkopf-Kabel
- 5: vordere Stirnfläche
- 6: hintere Stirnfläche
- 7: schräge Flanken
- 8: lotrechte Flanken
- 9: Meßfeld
- 10: Längsrichtung
- 11: Objekt
- 12: Durchgangsöffnung
- 13: Fuß
- 13': Magnetfüße
- 14: Spitze
- 15: Spanngurt
- 16: Spannbolzen
- 17: Paßbohrungen
- 18: Kontaktring
- 19: Zugbänderr
- 20: Gewindebohrung
- 21: Quergewindebohrung
- 22: Befestigungsöffnung
- 23: Schulter
- 24: Paßstifte
- 24a: Einschnürung
- 25: Querbohrung
- 26: Fortsatz
- 27: Schwenkhebel
- 28: Basishebel
- 29: Feder
- 30: Schnapper
- 31: Halterhebel
- 32: Zwischenhebel
- 33: Zugfeder
- 34: Magnete
- 35: Befestigungsstreben
- 36: Gewindebolzen

## Patentansprüche

1. Meßkopfhalterung (1) zum Befestigen eines Meßkopfes (3), insbesondere für 3-D-Speckle-Interferometrie am zu vermessenden Objekt (11),
wobei
die Meßkopfhalterung (1) ein Aufnahmeteil zum definierten daran Befestigen des Meßkopfes (3) aufweist,
**dadurch gekennzeichnet, daß**
- wenigstens ein Befestigungselement zum Fixieren des Aufnahmeteiles am zu vermessenden Objekt (11) vorhanden ist, und
- das Befestigungselement Füße (13) umfaßt, die mit ihrem rückwärtigen Ende am Aufnahmeteil befestigt sind und mit ihrem vorderen Ende auf dem Objekt aufsitzen, und die Füße mit Vorspannung am Objekt (11) gehalten werden.

2. Meßkopfhalterung nach Anspruch 1,
**dadurch gekennzeichnet, daß**
das Aufnahmeteil so ausgebildet ist, daß ein definierter Punkt (Fixpunkt) der Meßkopfhalterung (1) auch bei Verformung des Meßobjektes (11) in konstanter Relativlage zu einem definierten Punkt des Meßobjektes (11) verbleibt.

3. Meßkopfhalterung nach Anspruch 2,
**dadurch gekennzeichnet, daß**
der Fixpunkt einer der Kontaktpunkte zwischen der Meßkopfhalterung (1) und dem Meßobjekt (11) ist.

4. Meßkopfhalterung nach Anspruch 2,
**dadurch gekennzeichnet, daß**
der Fixpunkt ein Punkt im Meßfeld (9) des Meßkopfes (3), insbesondere der geometrische Mittelpunkt des Aufnahmeteiles, ist.

5. Meßkopfhalterung nach Anspruch 1,
**dadurch gekennzeichnet, daß**
das Aufnahmeteil so ausgebildet ist, daß es an mindestens drei Stellen einen definierten Abstand der Meßkopfhalterung (1) zum Meßobjekt sicherstellt, ohne Fixpunkt des Aufnahmeteiles am Objekt.

6. Meßkopfhalterung nach einem der vorhergehenden Ansprüche,
**dadurch gekennzeichnet, daß**
das Aufnahmeteil ein Aufsatzring (2) ist, dessen Durchgangsöffnung (12) insbesondere größer ist als das Meßfeld (9) des Meßkopfes (3).

7. Meßkopfhalterung nach einem der vorhergehenden Ansprüche,
**dadurch gekennzeichnet, daß**
das Befestigungselement drei Füße (13) umfaßt, das Aufnahmeteil ein Aufsatzring (2) ist und wenigstens einer der Füße (13) am vorderen Ende eine Spitze (14) aus hartem Material aufweist.

8. Meßkopfhalterung nach einem der vorhergehenden Ansprüche,
**dadurch gekennzeichnet, daß**
die Vorspannung mittels Federkraft oder mittels Magnetkraft, Vakuum, Luftüberdruck oder hydraulisch erzeugt wird, und insbesondere die Magnetkraft durch einen Magneten am vorderen Ende des jeweiligen Fußes (13) erzeugt wird.

9. Meßkopfhalterung nach einem der vorhergehenden Ansprüche,
**dadurch gekennzeichnet, daß**
die Meßkopfhalterung (1) über einen Spanngurt, welcher insbesondere das Meßobjekt (11) und insbesondere auch den Meßkopf (3) umschlingt, am Objekt (11) gehalten wird, und insbesondere der Spanngurt (15) in seinem Verlauf eine Feder aufweist, und insbesondere der Spanngurt (15) an Spannbolzen (16) befestigt ist, die am Aufnahmeteil, insbesondere am Aufsatzring (2) und/oder am Meßkopf (3) befestigt, insbesondere verschraubt, sind.

10. Meßkopfhalterung nach einem der vorhergehenden Ansprüche,
**dadurch gekennzeichnet, daß**
die vom Objekt (11) abgewandte hintere Stirnfläche (6) des Aufnahmeteiles, insbesondere des Aufsatzringes (2), Paßelemente, insbesondere Paßbohrungen (17), aufweist zum definierten reproduzierbaren Aufsetzen des Meßkopfes (3) , und insbesondere die Paßelemente, insbesondere die Paßbohrungen (17), so angeordnet sind, daß ein Aufsetzen des Meßkopfes (3) auf dem Aufsatzring (2) nur in einer einzigen Lage möglich ist.

11. Meßkopfhalterung nach einem der vorhergehenden Ansprüche,
**dadurch gekennzeichnet, daß**
der Aufsatzring (2) eine ebene, ringförmige hintere Stirnfläche (6) zum Aufsetzen des Meßkopfes (3) aufweist, in der insbesondere die Paßelemente, z. B. Paßbohrungen (17), angeordnet sind.

12. Meßkopfhalterung nach einem der vorhergehenden Ansprüche,
**dadurch gekennzeichnet, daß**
der Aufsatzring (2) eine konkav kegelig nach innen geneigte ringförmige vordere Stirnfläche (5) umfaßt, in welcher insbesondere lotrecht zur geneigten Stirnfläche (5) die Bohrungen, insbesondere Gewindebohrungen (20) zum Einschrauben der Füße (13), insbesondere gleichmäßig über den Umfang verteilt, angeordnet sind.

13. Meßkopfhalterung nach einem der vorhergehenden Ansprüche,
**dadurch gekennzeichnet, daß**
der Aufsatzring (2) von der vorderen Stirnfläche (5) schräg nach außen abfallende Flanken (7) entlang seines Umfanges aufweist, die insbesondere an vier im 90°-Winkel voneinander beabstandeten lotrechten Flanken (8), insbesondere erzeugt durch Abfräsungen, unterbrochen sind, und insbesondere im Bereich der lotrechten Flanken (8) quer zur Längsrichtung (10), der Durchgangsrichtung der mittigen Durchgangsöffnung (20) des Aufsatzringes (2), verlaufende Quergewindebohrungen (21) angeordnet sind, die wenigstens zur Außenseite hin offen sind, und insbesondere im Bereich der schrägen Flanken (7) Befestigungsöffnungen (22), die insbesondere in Längsrichtung (10) verlaufen, insbesondere in einer Schulter, im Aufsatzring (22) angeordnet sind zum Verschrauben des Aufsatzringes (2) mit dem Meßkopf (3).

14. Meßkopfhalterung nach einem der vorhergehenden Ansprüche,
**dadurch gekennzeichnet, daß**
die Meßkopfhalterung (1), insbesondere der Meßkopf (3), eine Lichtquelle mit sichtbarem Licht, insbesondere eine weiße Leuchtdiode (LED), gerichtet auf das Meßobjekt (11), umfaßt.

15. Meßkopfhalterung nach einem der vorhergehenden Ansprüche,
**dadurch gekennzeichnet, daß**
die Länge der Füße (13) sowie die Schrägstellung der Gewindebohrungen (20) für die Füße (13) so dimensioniert sind, daß das vordere Kontaktende der Füße (13) zum Objekt (11) hin innerhalb des freien Querschnitts der Durchgangsöffnung (12), insbesondere innerhalb des Meßfeldes (9), liegen.

16. Meßkopfhalterung nach einem der vorhergehenden Ansprüche,
**dadurch gekennzeichnet, daß**
das in den Meßkopf (3), insbesondere an dessen Rückseite, hineinführende Meßkopf-Kabel (4) in seinem Verlauf einen Längenausgleich, insbesondere in Form einer Gummimanschette etc., insbesondere einen in Längsrichtung des Kabels federnden Längenausgleich, umfaßt, um am Kabel (4) auftretenden Zug von der Meßkopfhalterung abzuhalten.

## Claims

1. Measuring head support (1) for fixing a measuring head (3), in particular for three-dimensional speckle interferometry on an object to be measured (11),
wherein
the measuring head support (1) has a reception part for definedly fixing thereon the measuring head (3),
**characterized in that**
- at least one fixing element is provided for securing the reception part to the object to be measured (11), and
- the fixing element includes feet (13), which are fixed to the reception part with their rear end and are seated on the object with their front end, and **in that** the feet are held on the object (11) under initial tension.

2. Measuring head support according to claim 1,
**characterized in that**
the reception part is designed such that even at a deformation of the measuring object (11) a defined point (fixed point) of the measuring head support (1) remains in a constant relative position to a defined point of the measuring object (11).

3. Measuring head support according to claim 2,
**characterized in that**
the fixed point is one of the points of contact between the measuring head support (1) and the measuring object (11).

4. Measuring head support according to claim 2,
**characterized in that**
the fixed point is a point located in the field of measurement (9) of the measuring head (3), in particular the geometric centre of the reception part.

5. Measuring head support according to claim 1,
**characterized in that**
the reception part is designed such that it ensures a defined spacing of the measuring head support (1) to the measuring object at at least three locations, without the fixed point of the reception part on the object.

6. Measuring head support according to any one of the preceding claims,
**characterized in that**
the reception part is an attachment ring (2), whose through hole (12) is in particular larger than the field of measurement (9) of the measuring head (3).

7. Measuring head support according to any one of the preceding claims,
**characterized in that**
the fixing element includes three feet (13), the reception part is an attachment ring (2) and at least one of the feet (13) has a tip (14) of hard material on the front end.

8. Measuring head support according to any one of the preceding claims,
**characterized in that**
the initial tension is generated by means of spring force or by means of magnetic force, vacuum, positive air pressure or hydraulically, and **in that** particularly the magnetic force is generated by a magnet located on the front end of the respective foot (13).

9. Measuring head support according to any one of the preceding claims,
**characterized in that**
the measuring head support (1) is held on the object (11) by means of a tension belt, which embraces in particular the measuring object (11) and in particular also the measuring head (3), and **in that** particularly the tension belt (15) has a spring in its course, and **in that** particularly the tension belt (15) is fixed to tension rods (16), which are fixed, in particular screwed to the reception part, in particular to the attachment ring (2) and/or to the measuring head (3).

10. Measuring head support according to any one of the preceding claims,
**characterized in that**
the rear face (6) of the reception part, in particular of the attachment ring (2), that is turned away from the object (11) has fitting elements, in particular fitting bore holes (17) for the defined reproducible attachment of the measuring head (3), and **in that** in particular the fitting elements, in particular the fitting bore holes (17), are arranged such that an attachment of the measuring head (3) to the attachment ring (2) is possible in a single position only.

11. Measuring head support according to any one of the preceding claims,
**characterized in that**
the attachment ring (2) has a plane, annular rear face (6) for attaching the measuring head (3), wherein in particular the fitting elements, e.g. fitting bore holes (17), are arranged.

12. Measuring head support according to any one of the preceding claims,
**characterized in that**
the attachment ring (2) includes a concave annular front face (5) that is conically inclined to the inside, in which the bore holes, in particular tapholes (20) for screwing in the feet (13), are arranged in particular vertically to the inclined face (5) and are in particular evenly distributed over the circumference.

13. Measuring head support according to any one of the preceding claims,
**characterized in that**
the attachment ring (2) has flanks (7) along its circumference, which decline from the front face (5) to the outside and are interrupted in particular at four vertical flanks (8), spaced from each other in a 90° angle and produced in particular by millings, and **in that** particularly in the area of the vertical flanks (8) transverse tapholes (21) are arranged, which extend transversely to the longitudinal direction (10), the direction of passage of the central through hole (12) of the attachment ring (2), and are open at least to the outside, and **in that** particularly in the area of extend in particular in the longitudinal direction (10), in particular in a shoulder, for screwing the attachment ring (2) to the measuring head (3).

14. Measuring head support according to any one of the preceding claims,
**characterized in that**
the measuring head support (1), in particular the measuring head (3), includes a light source with visible light, in particular a white light-emitting diode (LED), directed onto the measuring object (11).

15. Measuring head support according to any one of the preceding claims,
**characterized in that**
the length of the feet (13) and the inclined position of the tapholes (20) for the feet (13) are dimensioned such that the front contact end of the feet (13) lies towards the object (11) within the free cross-section of the through hole (12), in particular within the field of measurement (9).

16. Measuring head support according to any one of the preceding claims,
**characterized in that**
the measuring head cable (4) leading into the measuring head (3), in particular at its rear, includes in its course a length adjustment, in particular in the form of a rubber sleeve etc., in particular a length adjustment that is flexible in the longitudinal direction of the cable in order to keep tension occurring at the cable (4) away from the measuring head support.

## Revendications

1. Support de tête de mesure (1) pour la fixation d'une tête de mesure (3), en particulier pour l'interférométrie speckle en 3 D sur l'objet à mesurer (11),
le support de tête de mesure (1) présentant une partie de logement pour la fixation définie de la tête de mesure (3),
**caractérisé en ce qu'**
- il existe au moins un élément de fixation pour l'immobilisation de la partie de logement sur l'objet à mesurer (11) et
- l'élément de fixation comprend des pieds (13) qui sont fixés sur la pièce de logement par leur extrémité arrière et reposent sur l'objet par leur extrémité avant et **en ce que** les pieds sont maintenus sur l'objet (11) par précontrainte.

2. Support de tête de mesure selon la revendication 1, **caractérisé en ce que** la pièce de logement est agencée de sorte qu'un point défini (point fixe) du support de tête de mesure (1) reste en position relative constante par rapport à un point défini de l'objet de mesure (11) même lors de la déformation de l'objet de mesure (1).

3. Support de tête de mesure selon la revendication 1, **caractérisé en ce que** le point fixe est l'un des points de contact entre le support de tête de mesure et l'objet de mesure (11).

4. Support de tête de mesure selon la revendication 2, **caractérisé en ce que** le point fixe est l'un des points dans le champs de mesure (9) de la tête de mesure (3), en particulier le milieu géométrique de la pièce de logement.

5. Support de tête de mesure selon la revendication 1, **caractérisé en ce que** la pièce de logement est agencée de sorte qu'elle assure au moins à trois points de mesure une distance définie entre le support de tête de mesure (1) et le rapport à l'objet de mesure sans point fixe de la pièce de logement sur l'objet.

6. Support de tête de mesure selon l'une des revendications précédentes, **caractérisé en ce que** la pièce de logement est un anneau de couronnement (2) dont l'ouverture de passage (12) est plus grande en particulier que le champ de mesure (9) de la tête de mesure (3).

7. Support de tête de mesure selon l'une des revendications précédentes, **caractérisé en ce que** l'élément de fixation comprend trois pieds (13), que la pièce de logement est un anneau de couronnement (2) et qu'au moins l'un des pieds (13) présente sur l'extrémité avant une pointe (14) en matériau dur.

8. Support de tête de mesure selon l'une des revendications précédentes, **caractérisé en ce que** la précontrainte est générée par force de ressort ou par force magnétique, vide, surpression d'air ou de manière hydraulique et en particulier la force magnétique est générée par un aimant à l'extrémité avant du pied respectif (13).

9. Support de tête de mesure selon l'une des revendications précédentes, **caractérisé en ce que** le support de tête de mesure (1) est maintenu sur l'objet (11) par une courroie de serrage qui entoure en particulier l'objet de mesure (11) et en particulier également la tête de mesure (3), et en particulier la courroie de serrage (15) présente dans son étendue un ressort et en particulier la courroie de serrage (15) est fixée sur des boulons de serrage (16) qui sont fixés sur la pièce de logement, en particulier sur l'anneau de couronnement (2) et/ou sur la tête de mesure (3), en particulier sont vissés.

10. Support de tête de mesure selon l'une des revendications précédentes, **caractérisé en ce que** la surface frontale arrière (6) détournée de l'objet (11) de la pièce de logement, en particulier de l'anneau de couronnement (2) présente des éléments d'ajustement, en particulier des perçages d'ajustement (17) pour la mise en place définie reproductible de la tête de mesure (3) et en particulier les éléments d'ajustement, en particulier les alésage d'ajustage (17) sont disposés de sorte qu'une mise en place de la tête de mesure (3) sur l'anneau de couronnement (2) n'est possible que dans une seule position.

11. Support de tête de mesure selon l'une des revendications précédentes, **caractérisé en ce que** l'anneau de couronnement (2) présente une surface frontale arrière annulaire plane (6) pour la mise en place de la tête de mesure (3), dans laquelle en particulier sont disposés les éléments d'ajustage par exemple les alésages d'ajustage (17).

12. Support de tête de mesure selon l'une des revendications précédentes, **caractérisé en ce que** l'anneau de couronnement (2) comprend une surface frontale avant (5) concave et conique annulaire inclinée vers l'intérieur dans laquelle en particulier perpendiculairement à la surface frontale inclinée (5), des alésages, en particulier des alésages filetés (20) pour le vissage des pieds (13) sont disposés en particulier de manière uniformément répartie sur la périphérie.

13. Support de tête de mesure selon l'une des revendications précédentes, **caractérisé en ce que** l'anneau de couronnement (2) présente le long de sa périphérie des flancs (8) tombant vers l'extérieur de manière inclinée depuis la surface frontale avant (5) qui sont en particulier réalisés par chanfrein sur quatre flancs perpendiculaires (8) à distance les uns des autres en formant un angle de 90° et sont interrompus et en particulier des alésages transversaux filetés (21) s'étendant transversalement à la direction longitudinale (10), à la direction de passage de l'ouverture médiane (20) de l'anneau de couronnement (2), sont disposés dans la zone des flancs perpendiculaires(8), alésages qui sont ouverts au moins en direction de la face externe et en particulier dans la zone des flancs inclinés (7) sont disposées dans l'anneau de couronnement (22) des ouvertures de fixation (22) qui s'étendent en particulier dans le sens longitudinal (10) en particulier dans un épaulement, pour visser l'anneau de couronnement (2) sur la tête de mesure (3) .

14. Support selon l'une des revendications précédentes, **caractérisé en ce que** le support de tête de mesure (1), en particulier la tête de mesure (3) comprend une source de lumière visible, en particulier une diode lumineuse blanche (LED), dirigée sur l'objet de mesure (11).

15. Support selon l'une des revendications précédentes, **caractérisé en ce que** la longueur de pieds (13) ainsi que la position inclinée des perçages filetés (20) pour les pieds sont dimensionnés de sorte que les extrémités avant de contact des pieds (13) sont appliquées en direction de l'objet (11) à l'intérieur de la section transversale libre de l'ouverture de passage (12), en particulier à l'intérieur du champ de mesure.

16. Support selon l'une des revendications précédentes, **caractérisé en ce que** le câble de mesure (4) s'engageant dans la tête de mesure (3), en particulier sur sa face arrière, comprend dans son prolongement, une compensation de longueur en particulier sous forme d'un manchon de caoutchouc etc..en particulier une compensation de longueur élastique dans le sens longitudinal du câble pour soulager le support de tête de mesure la traction survenant sur le câble (4)
